# EUROPEAN PATENT APPLICATION

(11) **EP 3 521 473 A1**
(43) Date of publication of application: **07.08.2019**
(21) Application number: 17855600.7
(22) Date of filing: 04.09.2017
(51) Int. Cl.: C22C 38/00, C22C 38/60, C21D 8/06

(54) **HOT-ROLLED STEEL AND STEEL PART**

(30) Priority: 29.09.2016 JP 2016191456
(71) Applicant: Nippon Steel & Sumitomo Metal Corporation, Tokyo 100-8071 (JP)
(72) Inventor: YOSHIDA Suguru, Tokyo 100-8071 (JP); TERAMOTO Shinya, Tokyo 100-8071 (JP); SHIGA Akira, Tokyo 100-8071 (JP); KUBOTA Manabu, Tokyo 100-8071 (JP); HASEGAWA Hajime, Tokyo 100-8071 (JP); MIZUKAMI Hideo, Tokyo 100-8071 (JP)
(74) Representative: Vossius & Partner Patentanwälte Rechtsanwälte mbB
(86) International application number: PCT/JP2017/031775
(87) International publication number: WO 2018/061642

(57) **Abstract**

There is provided a hot rolled steel according to one aspect of the invention including, as a predetermined chemical composition: Bi: 0.0001 mass% to 0.0050 mass%, in which 90 area% or more of a metallographic structure is configured with a ferrite and a pearlite, and an average number density of Mn sulfides measured on a cross section parallel to a rolling direction having an aspect ratio of more than 10 and 30 or less which is extended along the rolling direction, is 50 pieces/mm² to 200 pieces/mm².

## Description

### [Technical Field of the Invention]

The present invention relates to a hot rolled steel.

Priority is claimed on Japanese Patent Application No. 2016-191456, filed September 29, 2016, the content of which is incorporated herein by reference.

### [Related Art]

Components for an engine and components for a suspension system of a vehicle are obtained by forming steel by hot forging and arbitrarily performing heat treatment (hereinafter, referred to as heat treating) such as quenching and tempering. A component subjected to the heat treating is referred to as a heat-treated component, and a component not subjected to the heat treating is referred to as non heat-treated component. In both cases, mechanical properties necessary for a component to be used are ensured.

As an example of the component for a vehicle engine, a connecting rod (hereinafter, referred to as a conrod) is used. This component is a component which transmits power when converting a piston reciprocating motion into a rotation motion performed by a crankshaft in an engine. The conrod is configured with a cap portion and a rod portion, the conrod is assembled with the crankshaft by fastening an eccentric portion of the crankshaft which is called a pin portion to be interposed between the cap portion and the rod portion, and accordingly, the power is transmitted by a mechanism of rotating and sliding along the pin portion.

In order to improve consistency of the cap portion and the rod portion, it is necessary to smooth mating surfaces of the cap portion and the rod portion, when manufacturing a typical conrod. In addition, when fastening the pin portion to be interposed between the cap portion and the rod portion, it is necessary to position the cap portion and the rod portion. Thus, when manufacturing a typical conrod, it is necessary to provide recesses and protrusions for positioning on the mating surfaces of the cap portion and the rod portion. A machining process of smoothing the mating surfaces and providing recesses and protrusions on the mating surfaces causes an increase in a manufacturing time and a manufacturing cost of a conrod. In order to omit the machining process of providing recesses and protrusions, recently, a fracture-split type conrod is widely used.

The fracture-split type conrod is a component obtained by a method of performing fracturing and splitting by performing hot forging and the like with respect to steel to perform forming in a shape in which a cap portion and a rod portion are integrally formed, and then, providing a notch on a portion corresponding to a boundary between the cap portion and the rod portion. The mating surfaces of the cap portion and the rod portion obtained by this method are fracture surfaces having recesses and protrusions, obtained by the fracture and split. By fitting the fracture-split fracture surfaces, it is possible to perform the positioning when assembling the conrod with the crankshaft. Thus, in the manufacturing of the fracture-split type conrod, it is possible to omit both a machining for increasing consistency of the mating surfaces and a machining for providing recesses and protrusions for positioning on the mating surfaces. Therefore, regarding the fracture-split type conrod, it is possible to significantly decrease the number of machining process of components and to significantly improve economic efficiency at the time of manufacturing components.

C70S6 produced in compliance with DIN is spread in Europe and America as a steel provided for the fracture-split type conrod. C70S6 is high carbon non heat-treated steel including C content of 0.7 mass%, and a metallographic structure thereof is formed of a pearlite structure having low ductility and toughness, in order to prevent a dimensional change at the time of the fracture and split. C70S6 has a small amount of plastic deformation in the vicinity of a fracture surface at the time of the fracture, and thus, excellent fracture-split properties are obtained. The fracture-split properties of steel are an index of evaluating fitting properties between fracture surfaces of steel obtained by performing the fracturing with respect to the steel. It is determined that steel having a small deformation amount in the vicinity of the fracture surfaces, a large brittle fracture area ratio of the fracture surface, and a small amount of chips generated at the time of the fracturing, has excellent fracture-split properties. However, since the structure of C70S6 is coarse compared to a ferrite-pearlite structure of medium carbon non heat-treated steel which is typical steel for a conrod, a yield ratio (yield strength/tensile strength) is low, and thus, C70S6 cannot be applied to a high-strength conrod in which a high buckling strength is required.

In order to increase the yield ratio of steel, it is necessary that the carbon content of steel is controlled to be low and a ferrite fraction of steel is increased. However, in a case where the ferrite fraction of steel is increased, ductility of steel is improved and the amount of plastic deformation in the vicinity of a fracture surface at the time of the fracture and split. Accordingly, problems of parts performance occur, in which the shape deformation of a conrod sliding portion fastened to a pin portion of a crankshaft is increased and a circularity is decreased.

In addition, due to an increase in engine output due to the spread of high-power diesel engines or turbo engines, there is a need for prevention of displacement of a cap portion and a rod portion of a conrod, that is, the improvement of fitting properties and improvement of a fastening force. Among these, the improvement of fitting properties is effectively performed by controlling a structure of a steel so that recesses and protrusions on fracture-split surfaces have an increased size.

Some non heat-treated steels have been proposed as a steel suitable for a fracture-split type conrod having high strength. Patent Documents 1 and 2 disclose a technology of improving fracture-split properties by adding a large amount of embrittlement element such as Si or P so as to decrease ductility and toughness of the steel. Patent Documents 3 and 4 disclose a technology of decreasing ductility and toughness of a ferrite by using precipitation strengthening of second phase particles, to improve fracture-split properties of the steel. In addition, Patent Documents 5 to 7 disclose a technology of controlling a shape of a Mn sulfide in steel to improve fracture-split properties.

In these technologies, the deformation amount of the fracture-split parts is decreased, but materials become brittle. Accordingly, in the steel obtained by these technologies, chips are generated at the time of fracture and split or when fitting fracture surfaces to each other. When chips of the fracture surfaces are generated, a position displacement of a fitting portion occurs, and thus, the fitting cannot be performed with excellent accuracy. Particularly, if the sizes of the recesses and the protrusions on the fracture surfaces are increased, a frequency of generation of chips or cracks at the time of fracture is increased. Therefore, steel which can satisfy both an increase in size of recesses and protrusions of the fracture surfaces and prevention of generation of chips and cracks, at the time of fracture at the same time had been required. As a solution to the prevention of generation of chips and cracks, a technology of reducing segregation of V as disclosed in Patent Document 8. V is a chemical composition added for achieving high-strengthening.

However, there are still reasons of generation of chips and cracks, in addition to the segregation of V. In practice, in a case where the sizes of the recesses and the protrusions of the fracture surfaces are excessively increased, a frequency of generation of chips and cracks tends to be increased. This is because, when recessed parts and protrusions of fracture surfaces in a tensile direction are formed, cracks or recesses growing in a fracture surface direction are also formed. It is considered that, when fitting fracture surfaces to each other and applying stress to the fracture surfaces for fastening the fracture surfaces on each other, the cracks or recessed parts grown in the fracture surface direction may become a stress concentration portion, and small fracture may occur in this portion. Meanwhile, in order to increase fitting properties between the fracture surfaces, it is necessary that the sizes of the recesses and the protrusions of the fracture surfaces are increased. As described above, the improvement of fitting properties by increasing the sizes of the recesses and the protrusions of the fracture surfaces and the prevention of generation of chips and cracks are in a relationship contradicting each other, and satisfying both effects was not achieved by methods currently used.

In addition to the above description, in a case of manufacturing a conrod, the machining properties such as a drilling process or the like using a drill are also important. This is because that the operation becomes efficient by improving the machining properties, and a great economic effect is exhibited by improving productivity. That is, in the fracture-split conrod, it is necessary to improve the machining properties without impairing mechanical properties.

### [Prior Art Document]

### [Patent Document]

[Patent Document 1] Japanese Patent No. 3637375
[Patent Document 2] Japanese Patent No. 3756307
[Patent Document 3] Japanese Patent No. 3355132
[Patent Document 4] Japanese Patent No. 3988661
[Patent Document 5] Japanese Patent No. 4314851
[Patent Document 6] Japanese Patent No. 3671688
[Patent Document 7] Japanese Patent No. 4268194
[Patent Document 8] Japanese Patent No. 5522321

### [Disclosure of the Invention]

### [Problems to be Solved by the Invention]

The invention is made in view of such circumstances, and an object of the invention is to provide a hot rolled steel and a steel component, in which the deformation amount in the vicinity of a fracture surface at the time of the fracture and split is small, sizes of recesses and protrusions on the fracture surfaces are increased to increase fitting properties, the amount of chips generated on the fracture surfaces is suppressed, and hot forgeability and machinability are excellent.

### [Means for Solving the Problem]

The gist of the invention is as follows.
(1) According to an aspect of the invention, there is provided a hot rolled steel including, as a chemical composition: C: 0.35 mass% to 0.45 mass%; Si: 1.0 mass% to 1.9 mass%; Mn: 0.10 mass% to 0.20 mass%; P: 0.010 mass% to 0.035 mass%; S: 0.06 mass% to 0.10 mass%; Cr: 0.25 mass% or less; V: 0.20 mass% to 0.40 mass%; N: 0.0060 mass% to 0.0150 mass%; B: 0.0050 mass% or less; Bi: 0.0001 mass% to 0.0050 mass%; Ti: 0 mass% to 0.050 mass%; Nb: 0 mass% to 0.030 mass%; and a remainder including Fe and impurities, in which 90 area% or more of a metallographic structure is configured with a ferrite and a pearlite, and an average number density of Mn sulfides measured on a cross section parallel to a rolling direction having an equivalent circle diameter of 1 µm to 5 µm and an aspect ratio of more than 10 and 30 or less which is extended along the rolling direction, is 50 pieces/mm² to 200 pieces/mm².
(2) The hot rolled steel according to (1) described above may include, as the chemical composition, one or two elements of Ti: 0.005 mass% to 0.050 mass% and Nb: 0.005 mass% to 0.030 mass%.
(3) According to another aspect of the invention, there is provided a steel component including, as a chemical composition: C: 0.35 mass% to 0.45 mass%; Si: 1.0 mass% to 1.9 mass%; Mn: 0.10 mass% to 0.20 mass%; P: 0.010 mass% to 0.035 mass%; S: 0.06 mass% to 0.10 mass%; Cr: 0.25 mass% or less; V: 0.20 mass% to 0.40 mass%; N: 0.0060 mass% to 0.0150 mass%; B: 0.0050 mass% or less; Bi: 0.0001 mass% to 0.0050 mass%; Ti: 0 mass% to 0.050 mass%; Nb: 0 mass% to 0.030 mass%; and a remainder including Fe and impurities, in which 90 area% or more of a metallographic structure is configured with a ferrite and a pearlite, and an average number density of Mn sulfides measured on a cross section parallel to a rolling direction having an equivalent circle diameter of 1 µm to 5 µm and an aspect ratio of more than 10 and 30 or less which is extended along the rolling direction, is 50 pieces/mm² to 200 pieces/mm².
(4) In the steel component according to (3) described above, in a case where tensile fracture of the steel component is caused by tensile stress parallel to the rolling direction to form a fracture surface, differences in level observed on the cross section parallel to the rolling direction, in which a difference in height towards a direction parallel to the tensile stress is 80 µm or more and an angle with respect to the direction parallel to the tensile stress is 45 degrees or less, may be formed on the fracture surface at an average number density of 2.0 or more per 10 mm; a brittle fracture surface may be 98% or more of the fracture surface as an area ratio; and an average number density of cracks or recessed parts observed on the cross section parallel to the rolling direction, in which an angle with respect to the direction parallel to the tensile stress exceeds 45 degrees, which are formed over a length of 80 µm or more and some of which are propagated to an inner portion of the steel component, may be less than 3.0 per 10 mm on the fracture surface.
(5) The steel component according to (3) or (4) described above may include, as the chemical composition, one or two elements of Ti: 0.005 mass% to 0.050 mass% and Nb: 0.005 mass% to 0.030 mass%.

### [Effects of the Invention]

In the hot rolled steel and the steel component according to the aspect of the invention, the amount of plastic deformation in the vicinity of the fracture surface is small and the amount of chips generated on the fracture surface is decreased, when the fracture and the split are performed. Accordingly, in a case where the fracture surfaces are fit to each other, the fracture surfaces can be fit to each other with excellent accuracy without occurrence of a position displacement, and it is possible to realize improvement of accuracy of the steel component and improvement of yield at the same time. In addition, the hot rolled steel and the steel component according to the one aspect of the invention include an extremely small amount of Bi, and thus, machinability is high. Meanwhile, an upper limit value of the Bi content in the hot rolled steel and the steel component according to the one aspect of the invention is low, and thus, high hot forgeability is maintained. Further, when the steel and the steel component according to the one aspect of the invention are used, a process of shaking chips off can be omitted, and a manufacturing cost can be reduced. Thus, it is greatly effective in improving economic efficiency in industry. The hot rolled steel according to the one aspect of the invention is suitably used in a steel component obtained by forming by hot forging, and particularly suitably used by fitting fracture surfaces again after performing the fracture and split.

### [Brief Description of the Drawings]

FIG. 1A is a plan view showing a test piece for evaluation of fracture-split properties.
FIG. 1B is a side view showing a test piece for evaluation of fracture-split properties.
FIG. 2 is a schematic view of crack propagation of a steel component according to the embodiment.

### [Embodiments of the Invention]

Hereinafter, a hot rolled steel and a steel component according to embodiments of the invention will be described.

The inventors found that it is possible to preferably control a size of recesses and protrusions of fracture surfaces obtained by fracture and split in a fracture surface perpendicular direction and to suppress the amount of chips, by controlling a shape of Mn sulfides present in a steel.

According to the findings of the inventors, shapes of recesses and protrusions of the fracture surfaces are affected by a degree of extension and a distribution frequency of Mn sulfides. In a case where the extension of the Mn sulfides is excessively performed (that is, an aspect ratio of the Mn sulfides is great), sizes of recesses and protrusions in the fracture surface perpendicular direction are significantly increased. Thus, chips or cracks are generated on the fracture surfaces at the time of fracture and split or at the time of fitting the fracture surfaces, and gaps are generated at the time of fitting the fracture surfaces to deteriorate fitting properties. Meanwhile, when the distribution frequency of the extended Mn sulfides is increased, the number of recesses and protrusions of the fracture surfaces is increased to improve fitting properties.

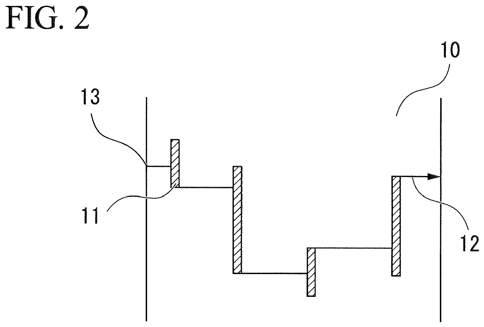

The inventors surmise that the phenomenon described above occurs due to the following configuration. The Mn sulfides of the steel component are extended in a rolling direction, when performing hot rolling of a hot rolled steel which is a material of the steel component. As shown in FIG. 2, when performing fracture and split of the steel component 10 in the direction substantially perpendicular to the rolling direction, first, the crack 12 is propagated in a direction perpendicular to the rolling direction from the fracture starting point 13. However, it is considered that, if the crack 12 reaches the Mn sulfides 11 extended in the rolling direction, the propagation direction of the crack 12 is greatly changed, and the crack 12 is propagated substantially parallel to the rolling direction along the interface between the Mn sulfides and the primary phase of the steel component 10. If the crack 12 reaches an end portion of the Mn sulfides 12, the propagation direction of the crack 12 changes in the stress direction, and the crack 12 is propagated substantially perpendicular to the rolling direction again. It is considered that, when the fracture and split proceed while the crack 12 repeats the propagation perpendicular to the rolling direction and the propagation parallel to the rolling direction, recesses and protrusions are formed on the fracture surfaces. Due to the reason described above, the inventors surmise that, if the number of the Mn sulfides 11 is great, the number of recesses and protrusions is increased, and if an aspect ratio of the Mn sulfides 11 is great, sizes of recesses and protrusions in the rolling direction are increased.

The inventors have knowledge that the addition of Ca, Zr, Mg, and the like is effective in the past inspection, as means for controlling the properties such as a degree of extension and a distribution frequency of Mn sulfides. These elements have a function of becoming a crystallization nucleus or a precipitation nucleus of the Mn sulfides and evenly and finely dispersing the Mn sulfides. However, these elements cause a decrease in hot working properties, and accordingly, the productivity of the steel may be decreased and the productivity in a case of producing a steel component by performing hot working of the steel may be decreased. Thus, the inventors have tried controlling of the shape of the Mn sulfides without using Ca, Zr, and Mg.

The inventors have found that by setting the Mn content to be 0.10 mass% to 0.20 mass% as will be described later, and accordingly, a temperature, at which the most Mn sulfides is generated, may be in a solid phase range of the steel. However, in this case, cracks are easily generated at a high temperature range, and surface cracks are particularly generated at a high frequency in a slab curve unit and a slab bending unit of a continuous casting device at the time of continuous casting. The inventors have found that it is necessary to perform ingot process which will be described later, in order to increase the S content with respect to the Mn content for controlling the shape of the Mn sulfides and in order to prevent slab surface cracks at the time of continuous casting.

In addition, the inventors have found that machinability is improved by adding 0.0001 mass% to 0.0050 mass% of Bi into steel.

The machinability is an index showing ease of machining properties. For example, it is determined that the steel generating short chips in a case of machining has excellent machinability. In a case where the length of chips is long, the chips disturb the machining, and accordingly, the short chips have high efficiency of machining.

Even in the related art, it is known that Bi causes improvement of machinability. For example, approximately 0.1 mass% of Bi has an effect of decreasing machining resistance and shortening the chips, by operating as a fracture origin in a chip generation region. However, it is thought that, in a case where the Bi content is approximately less than 0.1%, Bi hardly functions as a fracture origin, the number of fraction origins is decreased, and accordingly, such a mechanism is not sufficient exhibited. Meanwhile, Bi is also an element deteriorating the hot forgeability of the steel, and accordingly, it is necessary to decrease the content thereof as much as possible, in a case where there is no particular reason. Therefore, according to the related art, in the manufacturing of the steel for hot forging, in which the machinability is not necessary, it is necessary to decrease the Bi content as much as possible, and in a case where the machinability is improved by using Bi, it is necessary to set the Bi content to be approximately 0.1% or more. In addition, a test for achieving both increases of hot forgeability and machinability using Bi has not been tried.

However, the inventors have found that an extremely small amount of Bi which is 0.0001 mass% to 0.0050 mass% improves the machinability of the steel. It is thought that the extremely small amount of Bi does not function as a fracture origin in the chip generation region. However, the inventors have found that the extremely small amount of Bi is segregated at a crystal interface of steel and an interface between a primary phase and an inclusion (hereinafter, referred to as an "interface"). In a case where Bi is segregated at the interface, a bonding power between crystals or a bonding power between a primary phase and an inclusion decreases. Accordingly, in a case where Bi is segregated at the interface, the interface functions as a fracture origin to decrease the machining resistance and shorten the chip. Based on this finding of the inventors regarding the mechanism of improving cutting properties of the extremely small amount of Bi, the Bi content of the hot rolled steel according to the embodiment is set to 0.0001 mass% to 0.0050 mass% which is a significantly smaller amount than the amount used as a typical cutting agent. Accordingly, the machinability of the hot rolled steel according to the embodiment is increased without impairing hot forgeability.

Chemical compositions, a shape of the Mn sulfide, and a shape of fracture surfaces obtained due to fracture and split of the hot rolled steel and the steel component according to the embodiment of the invention obtained based on the findings described above will be described. The chemical compositions of the hot rolled steel do not change in accordance with hot working. In addition, since the size of the Mn sulfide is significantly small, compared to a size of deformation applied by hot working, most of the shape of the Mn sulfide of the hot rolled steel substantially do not change in accordance with hot working. Therefore, the chemical compositions and the shape of the Mn sulfide of the steel component according to the embodiment which is obtained by performing hot working of the hot rolled steel according to the embodiment are the same as those of the hot rolled steel according to the embodiment which will be described later. In addition, since the shape of the fracture surfaces obtained due to fracture and split is determined in accordance with the chemical compositions and the shape of the Mn sulfide, the hot rolled steel according to the embodiment and the steel component according to the embodiment have the same shape of fracture surfaces obtained due to fracture and split.

The hot rolled steel according to the embodiment is a steel including C, Si, Mn, P, S, Cr, V, N, B, and Bi, as chemical compositions, with predetermined percentages. When the hot rolled steel according to the embodiment includes the chemical compositions which will be described later, ductility is preferably controlled, it is possible to improve a percentage of a brittle fracture surface of a fracture surface (tensile fracture surface) obtained due to tensile stress, and it is possible to increase a size of recesses and the protrusions of fracture surfaces in the fracture surface perpendicular direction by precipitating the Mn sulfides. Accordingly, in the hot rolled steel according to the embodiment, the fracture surfaces obtained at the time of the fracture and split have high fitting properties. In addition, the hot rolled steel according to the embodiment may include any one or two elements of Ti and Nb, as chemical compositions.

Hereinafter, a reason for limiting the chemical compositions of the hot rolled steel and the steel component according to the embodiment will be described. Hereinafter, the reason for limiting the chemical compositions of the hot rolled steel is equivalent to the reason for limiting the chemical compositions of the steel component, unless otherwise noted.

### C: 0.35 mass% to 0.45 mass%

C has an effect of ensuring a tensile strength of the hot rolled steel and the steel component according to the embodiment and an effect of realizing excellent fracture-split properties by decreasing the amount of plastic deformation in the vicinity of a fracture surface at the time of the fracture. Since a volume fraction of a pearlite structure is increased due to an increase in a C content, the tensile strength is increased, and ductility and toughness are decreased. In order to exhibit these effects to the maximum, the C content in the steel was set to 0.35 mass% to 0.45 mass%. If the C content exceeds the upper limit value, a pearlite fraction of the hot rolled steel and the steel component becomes excessive and a frequency of generation of chips at the time of the fracture is increased. In addition, in a case where the C content is less than the lower limit value, the amount of plastic deformation in the vicinity of a fracture surface of the hot rolled steel and the steel component is increased, and fitting properties of the fracture surfaces is decreased. A preferable lower limit value of the C content is 0.36 mass% or 0.37 mass%. A preferable upper limit value of the C content is 0.44 mass%, 0.42 mass%, or 0.40 mass%.

### Si: 1.0 mass% to 1.9 mass%

Si strengthens a ferrite by solute strengthening, and decreases ductility and toughness of the hot rolled steel and the steel component. A decrease in ductility and toughness decreases the amount of plastic deformation in the vicinity of the fracture surface at the time of the fracture and split, and improves the fracture-split properties of the hot rolled steel and the steel component. In order to obtain this effect, it is necessary that a lower limit of a Si content is set to 1.0 mass%. Meanwhile, if the Si is excessively included, the frequency of generation of chips of the fracture surfaces is increased. Accordingly, an upper limit of the Si content is set to 1.9 mass%. A preferable lower limit value of the Si content is 1.1 mass%, 1.2 mass%, or 1.3 mass%. A preferable upper limit value of the Si content is 1.8 mass%, 1.6 mass%, or 1.4 mass%.

### Mn: 0.10 mass% to 0.20 mass%

Mn is combined with S to form a Mn sulfide. In a case where the Mn content is 0.10 mass% to 0.20 mass%, the most Mn sulfides are generated, in a case where the temperature of steel is in a solid phase range, and the Mn sulfides are dispersed finely at a high density. On the other hand, some Mn sulfides are generated on the interface between a solid phase and liquid phase in a case of solidifying the steel by casting, and size thereof becomes a comparatively large size. The coarse Mn sulfides are extended in a rolling direction by the subsequent hot rolling and dispersed in steel. In a case where the steel component formed of the hot rolled steel according to the embodiment is fractured, cracks are propagated along these finely dispersed Mn sulfides and extended Mn sulfides, and excellent fracture-split properties and formation of significant shapes of the recesses and the protrusions on the fracture surface are realized. In the invention, the shape of the Mn sulfide shown above is controlled without adding an alloy element which controls the shape of the Mn sulfide such as Zr, Ca, or Mg. In a case where the Mn content is less than 0.10 mass%, the number of extended Mn sulfides is decreased, and the shapes of the recesses and the protrusions on the fracture surface may not be significant. In addition, in a case where the Mn content exceeds 0.20 mass%, the number of fine Mn sulfides is not sufficient, the fracture-split properties are deteriorated, chips or cracks are significantly generated, and fitting properties are deteriorated. A more preferable lower limit value of the Mn content is 0.12 mass%, 0.13 mass%, or 0.15 mass%. A more preferable upper limit value of the Mn content is 0.19 mass%, 0.18 mass%, or 0.17 mass%.

### P: 0.010 mass% to 0.035 mass%

P decreases ductility and toughness of a ferrite and a pearlite, and decreases ductility and toughness of the hot rolled steel and the steel component. A decrease in ductility and toughness decreases the amount of plastic deformation in the vicinity of a fracture surface at the time of the fracture and split, and improves the fracture-split properties of the hot rolled steel and the steel component. However, P causes excessive embrittlement of a grain boundary and causes chips of the fracture surfaces to be easily generated. Therefore, a method for decreasing the ductility and the toughness by using the addition of P should not be positively used from viewpoints of prevention of generation of chips. In consideration of the above-mentioned description, a range of a P content is set to 0.010 mass% to 0.035 mass%. A preferable lower limit value of the P content is 0.011 mass%, 0.013 mass%, or 0.015 mass%. A preferable upper limit value of the P content is 0.030 mass%, 0.028 mass%, or 0.025 mass%.

### S: 0.06 mass% to 0.10 mass%

S is combined with Mn to form a Mn sulfide. When causing the fracture and split of the steel component obtained from the hot rolled steel according to the embodiment, cracks are propagated along the Mn sulfides extended in the rolling direction. Accordingly, the Mn sulfide has an effect of increasing the size of the recesses and the protrusions of the fracture surfaces in the fracture surface perpendicular direction and preventing position displacement when fitting the fracture surfaces to each other. In order to obtain this effect, it is necessary that a lower limit of a S content is set to 0.06 mass%. Meanwhile, if S is excessively included, the amount of plastic deformation in the vicinity of a fracture surface at the time of the fracture and split is increased, and the fracture-split properties may be decreased. In addition, the excessive amount of S may promote the generation of chips of the fracture surfaces. Due to the reasons described above, a suitable range of the S content is set to 0.06 mass% to 0.10 mass%. A preferable lower limit value of the S content is 0.07 mass%. A preferable upper limit value of the S content is 0.09 mass%.

### Cr: 0.25 mass% or less

Cr strengthens a ferrite by solute strengthening, and decreases ductility and toughness of the hot rolled steel and the steel component, in the same manner as Mn. The decreasing of the ductility and the toughness allows a decrease in the amount of plastic deformation in the vicinity of a fracture surface at the time of the fracture and improvement of fracture-split properties of the hot rolled steel and the steel component. In order to obtain the effect, it is preferable that a lower limit of a Cr content is set to 0.02 mass%. However, if Cr is excessively included, a lamellar spacing of the pearlite is decreased, and the ductility and the toughness of the pearlite is increased. Accordingly, the amount of plastic deformation in the vicinity of a fracture surface at the time of the fracture is increased and the fracture-split properties are decreased. In addition, if Cr is excessively included, a bainite structure is easily generated, and the fracture-split properties may be significantly decreased. Therefore, in a case of including Cr, the content thereof is set to 0.25 mass% or less. A preferable lower limit value of the Cr content is 0.05 mass%, 0.06 mass%, 0.10 mass%, or 0.12 mass%. A preferable upper limit value of the Cr content is 0.23 mass%, 0.20 mass%, or 0.18 mass%.

### V: 0.20 mass% to 0.40 mass%

V strengthens a ferrite and decreases ductility and toughness of the hot rolled steel and the steel component, by mainly forming a carbide or a carbonitride at the time of cooling after hot forging. The decreasing of the ductility and the toughness allows a decrease in the amount of plastic deformation in the vicinity of a fracture surface of the hot rolled steel and the steel component at the time of the fracture and improvement of fracture-split properties of the hot rolled steel and the steel component. In addition, V has an effect of increasing a yield ratio of the hot rolled steel by precipitation strengthening of a carbide or a carbonitride. In order to obtain these effects, it is necessary that a lower limit of a V content is set to 0.20 mass%. A preferable lower limit value of the V content is 0.23 mass% or 0.25 mass%. Meanwhile, if V is excessively included, the effect becomes saturated, and accordingly, an upper limit of the V content is 0.40 mass%. A preferable upper limit value of the V content is 0.38 mass% or 0.35 mass%.

### N: 0.0060 mass% to 0.0150 mass%

N mainly forms a V nitride or a V carbonitride at the time of cooling after hot forging and functions as a transformation nucleus of a ferrite, to promote ferritic transformation. Accordingly, N has an effect of preventing generation of a bainite structure which significantly impairs the fracture-split properties of the steel component obtained from the hot rolled steel. In order to obtain this effect, a lower limit of an N content is set to 0.0060 mass%. If N is excessively included, hot ductility of the hot rolled steel and the steel component is decreased, and cracks or defects may be easily generated at the time of hot working. Therefore, a lower limit of the N content is set to 0.0150 mass%. In addition, a preferable lower limit value of the N content is 0.0065 mass%, 0.0070 mass%, 0.0080 mass%, or 0.0085 mass%. A preferable upper limit value of the N content is 0.0140 mass%, 0.0130 mass%, or 0.0120 mass%.

### B: 0.0050 mass% or less

B is a representative element for improving hardenability. In the hot rolled steel and the steel component according to the embodiment, it is necessary to decrease the Mn content of which is an element for improving hardenability, and accordingly, the hardenability of the steel is decreased. B is included as an element for supporting a decrease in hardenability. B exhibits an effect of improving the hardenability even with a small content, and a preferable lower limit of the B content is 0.0008 mass% or more. A lower limit of the B content is 0.0014 mass%, 0.0015 mass%, or 0.0018 mass%. In addition, the effect of improving hardenability realized by B is saturated, and accordingly, an upper limit of the B content is 0.0050 mass%. However, a preferable upper limit of the B content is 0.0035 mass%, 0.0033 mass%, or 0.0030 mass%.

### Bi: 0.0001 mass% to 0.0050 mass%

Bi has an effect of decreasing deformation resistance at the time of cutting, by segregating at a crystal interface and an interface between a primary phase and an inclusion, and decreasing the bonding power of the interface. According to the related art, it is thought that, in order to cause Bi to function as a fracture origin at the time of cutting and deformation thereby improving machinability, the Bi content is necessarily approximately 0.1 mass% or more. However, the inventors have found that the machinability is improved even with 0.0050 mass% or less of Bi, by using Bi as an element which embrittles the interface, without using Bi as the fracture origin at the time of cutting and deformation.

A lower limit of the Bi content for exhibiting the above effect is set to 0.0001 %, but a preferable range of the Bi content for sufficiently exhibiting the effect may be 0.0010 mass% or more, 0.0012 mass% or more, or 0.0015 mass% or more. However, in a case where the Bi amount is more than 0.0050 mass%, the hot forgeability of the hot rolled steel and the steel component may be deteriorated. In addition, in a case where the Bi amount is more than 0.0050 mass%, the embrittlement of the interface becomes excessive and the cracks may be easily generated on the fracture surface. Therefore, the upper limit value of the Bi content is 0.0050 mass%. The Bi content is preferably 0.0045 mass% or less, 0.0040 mass% or less, 0.0035 mass% or less, or 0.0030 mass% or less.

In order to more significantly realize the effects of the invention, the hot rolled steel according to the embodiment can include by selecting one or two elements of Ti: 0.050 mass% or less and Nb: 0.030 mass% or less. However, the hot rolled steel and the steel component according to the embodiment can solve the problems, even in a case where Ti and Nb are not included. Accordingly, a lower limit value of Ti and a lower limit value of Nb is 0 mass%.

### Ti: 0 mass% to 0.050 mass%

Ti strengthens a ferrite by precipitation strengthening, and decreases ductility and toughness of the hot rolled steel and the steel component, by mainly forming a carbide or a carbonitride at the time of cooling after hot forging. The decreasing of the ductility and the toughness allows a decrease in the amount of plastic deformation in the vicinity of a fracture surface at the time of the fracture and improvement of fracture-split properties. However, if Ti is excessively included, the effect becomes saturated. In a case of including Ti in order to obtain the effect described above, an upper limit of a Ti content is preferably set to 0.050 mass%. In order to sufficiently exhibit the effect of Ti, the lower limit of the Ti content is preferably set to 0.005 mass%. A more suitable lower limit value of the Ti content is 0.015 mass%, 0.018 mass%, or 0.020 mass%. A more suitable upper limit value of the Ti content is 0.040 mass%, 0.035 mass%, or 0.030 mass%.

### Nb: 0 mass% to 0.030 mass%

Nb strengthens a ferrite by precipitation strengthening, and decreases ductility and toughness of the hot rolled steel and the steel component, by mainly forming a carbide or a carbonitride at the time of cooling after hot forging. The decreasing of the ductility and the toughness allows a decrease in the amount of plastic deformation in the vicinity of a fracture surface at the time of the fracture and improvement of fracture-split properties of the hot rolled steel and the steel component. However, if Nb is excessively included, the effect becomes saturated. In a case of including Nb in order to obtain the effect described above, an upper limit of a Nb content is preferably set to 0.030 mass%. In order to sufficiently exhibit the effect of Nb, the lower limit of the Nb content is preferably set to 0.005 mass%. A more suitable lower limit value of the Nb content is 0.010 mass%. A more suitable upper limit value of the Nb content is 0.030 mass%, 0.028 mass%, or 0.025 mass%.

The remainder of the chemical compositions of the hot rolled steel and the steel component according to the embodiment are Fe and impurities. The impurities are components mixed from a raw material such as an ore or a scrap and in a manufacturing environment and indicate components which do not affect the properties of the hot rolled steel and the steel component according to the embodiment. In addition, the hot rolled steel and the steel component according to the embodiment can include elements other than the components described above within a range not impairing the effect thereof. For example, 0 mass% to 0.01 mass% of Te, 0 mass% to 0.01 mass% of Zn, 0 mass% to 0.01 mass% of Sn, and the like may be included, within a range not impairing the effects of the hot rolled steel and the steel component according to the embodiment.

### Metallographic Structure: 90 area% or More is Configured With Ferrite and Pearlite

The metallographic structure of the hot rolled steel and the steel component according to the embodiment is a so-called a ferrite-pearlite structure. A bainite and the like may be included in the metallographic structure, but it is not preferable because an excessive amount of the bainite impairs the fracture-split properties. Therefore, the inventors determined that the metallographic structure of the hot rolled steel and the steel component according to the embodiment includes 90 area% or more of a ferrite and a pearlite. With this determination, the amount of the bainite is limited to be 10 area% or less and the fracture-split properties of the hot rolled steel and the steel component are excellently maintained. The metallographic structure of the hot rolled steel and the steel component according to the embodiment may include 92 area%, 95 area%, or 98 area% or more of a ferrite and a pearlite.

A ratio of the amounts of the ferrite and the pearlite is not particularly limited, as long as the total amount of the ferrite and the pearlite is in the range described above. For example, even if the amount of a ferrite or a pearlite is 0 area%, excellent fracture-split properties are maintained, as long as 90 area% of the metallographic structure is configured with the ferrite and the pearlite. In addition, a configuration of the remainder of the metallographic structure is not particularly limited, as long as the total amount of the ferrite and the pearlite is in the range described above. The amounts of the ferrite and the pearlite included in the metallographic structure are acquired by capturing a photomicrograph of a polished and etched cross section and performing image analysis of this photomicrograph.

Average Number Density of Mn Sulfides Measuring on Cross Section Parallel to Rolling Direction Having Equivalent Circle Diameter of 1 µm to 5 µm and Aspect Ratio of More Than 10 and 30 or Less which is Extended Along Rolling Direction: 50 pieces/mm² to 200 pieces/mm²

The Mn sulfides are formed in the hot rolled steel and the steel component according to the embodiment. The Mn sulfides are extended along the rolling direction of the hot rolled steel. The extended Mn sulfides are essential inclusion for forming shapes of recesses and protrusions on fracture surfaces obtained by causing tensile fracture with respect to the hot rolled steel and the steel component.

In the hot rolled steel and the steel component according to the embodiment, 50 pieces or more and 200 pieces or less of the extended Mn sulfides having an equivalent circle diameter of 1 µm to 5 µm and an aspect ratio of more than 10 and 30 or less by setting the rolling direction as a long axis side are dispersed per 1 mm². The extended Mn sulfides form recesses and protrusions in a tensile direction on the fracture surfaces formed by causing the tensile fracture in the rolling direction and increase the fitting properties between the fracture surfaces. The Mn sulfides satisfying the equivalent circle diameter regulation and the aspect ratio regulation described above can optimize sizes of the recesses and the protrusions in the tensile direction. In addition, in a case where the number of Mn sulfides satisfying the equivalent circle diameter regulation and the aspect ratio regulation described above is 50 pieces/mm² to 200 pieces/mm², the number of the recesses and the protrusions can be optimized. A lower limit value of the average number density of the Mn sulfides satisfying the equivalent circle diameter regulation and the aspect ratio regulation described above may be 75 pieces/mm² or 100 pieces/mm². In addition, an upper limit value of the average number density of the Mn sulfides satisfying the equivalent circle diameter regulation and the aspect ratio regulation described above may be 175 pieces/mm² or 150 pieces/mm².

The Mn sulfides having an aspect ratio of 10 or less and the Mn sulfides having an equivalent circle diameter of less than 1 µm cannot sufficiently increase the sizes of the recesses and the protrusions of the fracture surfaces in the tensile direction and do not contribute to the improvement of the fitting properties between the fracture surfaces. The Mn sulfides having an aspect ratio of more than 30 and the Mn sulfides having an equivalent circle diameter of more than 5 µm form significant recesses and protrusions of the fracture surfaces, but a frequency of generation of cracks or chips is increased. Accordingly, the fitting properties between the fracture surfaces are impaired. Therefore, it is preferable that the number density of the Mn sulfides not satisfying the equivalent circle diameter regulation and the aspect ratio regulation described above is preferably small. However, in a case where the number density of the Mn sulfides satisfying the equivalent circle diameter regulation and the aspect ratio regulation described above is in the range described above and the Mn content and the S content which are generating sources of the Mn sulfides are in the ranges described above, Mn and S in the chemical compositions are used for the Mn sulfides satisfying the equivalent circle diameter regulation and the aspect ratio regulation described above is in the range described above and the generation of the Mn sulfides not satisfying the equivalent circle diameter regulation and the aspect ratio regulation described above is sufficiently prevented. Accordingly, the number density of the Mn sulfides satisfying the equivalent circle diameter regulation and the aspect ratio regulation described above is not particularly limited.

In a case where the average number density of the Mn sulfides satisfying the equivalent circle diameter regulation and the aspect ratio regulation described above is less than the lower limit value, the number of the recesses and the protrusions of fracture surfaces is decreased and the fitting properties of the fracture surfaces after the fracture and split are insufficient. In addition, in a case where the average number density of the Mn sulfides satisfying the equivalent circle diameter regulation and the aspect ratio regulation described above is less than the lower limit value, the number density of the Mn sulfides not satisfying the equivalent circle diameter regulation and the aspect ratio regulation described above may be increased to impair the fracture-split properties or the fitting properties. On the other hand, in a case where the average number density of the Mn sulfides satisfying the equivalent circle diameter regulation and the aspect ratio regulation described above is more than the upper limit value, cracks or chips are generated on the fracture surfaces, and in this case, the fitting properties of the fracture surfaces are also impaired.

A measurement method of the average number density of the Mn sulfides satisfying the equivalent circle diameter regulation and the aspect ratio regulation described above in the hot rolled steel and the steel component is as follows.

First, the hot rolled steel and the steel component are cut in parallel to the rolling direction and cut sections are polished. Since the Mn sulfides are extended along the rolling direction, the extension direction of the Mn sulfides can be considered as the rolling direction of the hot rolled steel and the steel component, when cutting the hot rolled steel and the steel component.

Then, enlarged images of the cut sections are captured with an optical microscope or an electron microscope. A magnification at this time is not particularly limited and is preferably approximately 100 times. Since the Mn sulfides are substantially evenly distributed, an area for capturing an image is not particularly limited.

By performing image analysis of the images, it is possible to obtain the number density of the Mn sulfides satisfying the equivalent circle diameter regulation and the aspect ratio regulation described above in the area where the images are captured. Some extended Mn sulfides may be divided and distributed to be aggregated in a row shape in the rolling direction. However, two Mn sulfides which are arranged in the rolling direction (extension direction) and has a gap between end portions of 10 µm or less are considered as one extended Mn sulfide. This is because it is thought that such two Mn sulfides have the same effect as that of one Mn sulfide, in a point of propagating cracks generated at the time of the tensile fracture of the hot rolled steel or the steel component in the tensile direction.

Further, the capturing images and the analysis are repeated at least 10 times and the number density obtained by these operation is averaged. Accordingly, the average number density of the Mn sulfides satisfying the equivalent circle diameter regulation and the aspect ratio regulation described above, is acquired.

Next, a manufacturing method of the hot rolled steel according to the embodiment will be described. A manufacturing method of the hot rolled steel according to the embodiment includes a process of melting and casting with an ingot process of a steel having the same chemical compositions as those of the hot rolled steel according to the embodiment to obtain a bloom, a process of hot working such as blooming rolling with respect to the bloom to obtain a billet, and a process of hot rolling of the billet to obtain a round bar, the total reduction of area in the hot rolling is 80% or more, and a reduction of area at a temperature of 1,000°C or less in the hot rolling is 50% or more. A manufacturing method of the steel component according to the embodiment includes a process of heating the hot rolled steel according to the embodiment to 1,150°C to 1,280°C to perform hot forging and a process of air cooling or blast cooling of the hot rolled steel subjected to the hot forging to room temperature, or a process of cold forging of the hot rolled steel according to the embodiment and a process of cutting the cooled hot rolled steel to obtain a steel component having a predetermined shape.

The specific manufacturing method of the hot rolled steel according to the embodiment is as follows. First, a steel having the same chemical compositions as those of the hot rolled steel according to the embodiment is melted in a converter furnace and subjected to casting with an ingot process. The casting is set as a billet through further the blooming rolling process and the like. The obtained billet is set as a round bar by further hot rolling. By doing so, the hot rolled steel according to the embodiment is manufactured.

Unlike the continuous casting process, in the ingot process, stress due to high-temperature cracks such as bending stress in a case of casting with a bending type continuous casting machine normally used, is not generated, and accordingly the countermeasure of the high-temperature crack is not necessary. As a process in which the countermeasure of the high-temperature crack is not necessary, in the same manner as the ingot process, casting with a vertical type continuous casting machine is used. In addition, even in a case of using the bending type continuous casting machine, the high-temperature crack can be prevented, in a case where a slab provided for the casting is set as a coating layer type slab in which a component of the surface portion of the slab is set as a component which can prevent the high-temperature crack and the component inside of the slab is set as a component of the steel according to the embodiment.

A total reduction of area in the entire hot rolling, in a case of setting the billet as a round bar shape is preferably 80% or more. By doing so, the extension of the Mn sulfides in the steel can be realized. In addition, in order to significantly realize the extension of the Mn sulfides, it is necessary to perform the hot rolling in a temperature range in which a temperature hardness of the Mn sulfides is relatively low with respect to the steel, that is, a temperature range in which the extension of the Mn sulfides is easily performed. Specifically, it is necessary that the total reduction of area at a temperature range of 1,000°C or less is set to be 50% or more. In general, in order to decrease the rolling resistance and improve the productivity, the rolling conditions for increasing the rolling reduction in the temperature range of more than 1,000°C are used. However, in the manufacturing method of the hot rolled steel according to the embodiment, the hot rolling is performed in the low temperature range described above, in order to extend the Mn sulfides in the steel. In a case where these rolling conditions are not satisfied, the Mn sulfides are not sufficiently extended, and accordingly, the average number density of the Mn sulfides satisfying the equivalent circle diameter regulation and the aspect ratio regulation described above cannot be sufficiently increased. The hot rolled steel after the hot rolling may be cooled to room temperature or may be supplied to be further subjected to hot forging before the cooling.

The specific manufacturing method of the steel member according to the embodiment is as follows. The hot rolled steel obtained by the method described above is, for example, heated to 1,150°C to 1,280°C to perform the hot forging, and cooled to room temperature by air cooling (radiational cooling of steel in the atmosphere) or blast cooling (cooling by sending wind to a steel). By cutting the forged steel after the cooling, a steel component having a predetermined shape is obtained. When performing the forging of the hot rolled steel, the forging is not limited to the hot forging and cold forging may be performed.

In the hot rolled steel and the steel component according to the embodiment, in a case where tensile fracture is caused by tensile stress parallel to the rolling direction to form fracture surfaces, differences in level observed on the cross section parallel to the rolling direction, in which a difference in height towards a direction parallel to the tensile stress is 80 µm or more and an angle with respect to the direction parallel to the tensile stress is 45 degrees or less, are formed on the fracture surface at an average number density of 2.0 or more per 10 mm. That is, in a case where a random line (for example, line passing the center of the fracture surface) is drawn on the fracture surface formed by causing tensile fracture of the hot rolled steel and the steel component according to the embodiment by tensile stress parallel to the rolling direction, the number density of the differences in level on this line is 2.0 piece/10 mm or more as an average value. In addition, in the hot rolled steel and the steel component according to the embodiment, in a case where tensile fracture is caused by tensile stress parallel to the rolling direction to form fracture surfaces, differences in level observed on the cross section parallel to the rolling direction, in which an angle with respect to the direction parallel to the tensile stress exceeds 45 degrees, are formed over the length of 80 µm or more. An average number density of cracks or recessed parts obtained by propagation of a part thereof into the steel component is limited to be less than 3.0 per 10 mm on the fracture surface. In addition, in the hot rolled steel and the steel component according to the embodiment, in a case where tensile fracture is caused by tensile stress parallel to the rolling direction to form fracture surfaces, an area ratio of the brittle fracture surface on the fracture surface is 98% or more.

A reason of determining the properties of the fracture surface will be described. When the fracture surfaces formed by the tensile fracture are fit to each other and stress is applied to the fracture surfaces in a horizontal direction, the stress is three-dimensionally dispersed in the horizontal direction and two normal directions (tilt direction of 90° in the plane and a direction perpendicular to the fracture surfaces) due to the recesses and the protrusions of the fracture surfaces. In this case, as the sizes of the recesses and the protrusions of the fracture surfaces in the tensile direction are great, the applied stress is more dispersed. The inventors determined that, in a case where the differences in level formed by the recesses and the protrusions have an angle with respect to the direction parallel to the tensile stress of 45 degrees or less and have a difference in height towards the direction parallel to the tensile stress of 80 µm or more, the recesses and the protrusions contribute to the fitting properties. In addition, as long as the chips of the fracture surfaces are not generated, when the sizes of the differences in level of the fracture surfaces in the tensile direction are great, it is possible to more reliably prevent the position displacement at the time of applying stress.

The amount of generated chips correlates with the presence of cracks of the fracture surfaces extending in a direction perpendicular to the tensile direction (fracture surface direction) or the recessed parts. That is, as the number of cracks in the fracture surface direction or the recessed parts in the fracture surface direction having a size of a certain size or more is great, the amount of generated chips is increased. It is considered that, when fitting the fracture surfaces to each other, the cracks or the recessed parts in the fracture surface direction function as a stress concentration part and are finely fractured. Accordingly, chips are generated. The inventors found that it is necessary that the number of cracks or recessed parts in the fracture surface direction is suppressed to the minimum, in order to suppress the amount of chips generated on the fracture surfaces. Specifically, the inventors found that, in order to sufficiently suppress the amount of generated chips, it is necessary that an average number density of cracks or recessed parts observed on the cross section parallel to the rolling direction, in which an angle with respect to the direction parallel to the tensile stress exceeds 45 degrees, which are formed over a length of 80 µm or more and some of which are propagated to an inner portion of the steel component, is limited to be less than 3.0 per 10 mm.

Since the shape and the dispersed state of the Mn sulfides particularly greatly affect the shape of the fracture surfaces, it is important to control the shape and the dispersed state of the Mn sulfides, in order to maximize the recesses and the protrusions of the fracture surfaces within a range not generating the chips. More specifically, extending the Mn sulfides which become propagation paths of the cracks in a proper range and dispersing a large amount of the Mn sulfides contribute to the increasing the sizes of the recesses and of protrusions of the fracture surfaces in the tensile direction. Therefore, in the hot rolled steel and the steel component according to the embodiment, the significant shapes of the recesses and the protrusions of the fracture surfaces which can be experimentally realized within a range not generating the chips of the fracture surface at the time of the fracture, were determined as described above.

In addition, in the hot rolled steel and the steel component according to the embodiment, the chemical composition is preferably controlled, 90 area% or more of the metallographic structure is configured with a ferrite and a pearlite, and the Mn sulfides having a predetermined shape are dispersed in the inner part thereof. Accordingly, 98 area% or more of the fracture surfaces obtained by splitting the hot rolled steel and the steel component according to the embodiment by the tensile stress parallel to the rolling direction becomes a brittle fracture surface. Since the deformation occurs in a ductile fracture surface, the ductile fracture surface impairs the fitting properties of the fracture surfaces. In a case where 98 area% or more of the fracture surfaces is the brittle fracture surface, the fitting properties of the fracture surfaces are preferably maintained.

An evaluation method of the shape of the fracture surfaces is as follows.

An area ratio of the brittle fracture surface occupying the fracture surface is acquired by analyzing an image according to a method of a typical fracture surface analysis, demarcating a region where a brittle fracture surface configured with a cleavage crack, a pseudo cleavage crack, or an intergranular crack is generated, and calculating a percentage of the area of the region of the brittle fracture surface occupying the area of the entire fracture surface.

The deformation amount generated due to the fracture and split is acquired by performing bolting by facing the hot rolled steel or the steel component after the fracture, measuring a difference between an inner diameter in the fracture direction and an inner diameter in a direction perpendicular to the fracture direction, and considering this difference as the deformation amount generated due to the fracture and split.

The amount of chips generated on the fracture surfaces is acquired by repeating an operation of facing and bolting the fracture surfaces at a torque of 20 N·m to assemble the fracture surfaces and then, loosening the bolt to release the fracture surfaces, 10 times, measuring the total weight of fragments dropped due to the operations, and considering the total weight as the amount of chips generated on the fracture surfaces.

The number density of differences in level (differences in level in the tensile direction) observed on the cross section parallel to the rolling direction, in which a difference in height towards a direction parallel to the tensile stress is 80 µm or more and an angle with respect to the direction parallel to the tensile stress is 45 degrees or less, and the number density of cracks or recessed parts (cracks in the fracture surface direction) observed on the cross section parallel to the rolling direction, in which an angle with respect to the direction parallel to the tensile stress exceeds 45 degrees, which are formed over a length of 80 µm or more and some of which are propagated to an inner portion of the steel component, are evaluated by the following method. First, the hot rolled steel or the steel component, in which the fracture surfaces are formed, is cut in a direction parallel to a tensile direction to allow the observation of the shapes of the fracture surfaces in a direction perpendicular to the tensile direction. By performing resin embedding with respect to the fracture surfaces before the cutting, the shapes of the fracture surfaces may be maintained at the time of cutting. By observing the shapes of the fracture surfaces on the cut sections described above, recesses and protrusions in the tensile direction and recesses and protrusions in the fracture surface direction can be observed.

The cut sections for measuring the number density of the differences in level in the tensile direction and the cracks in the fracture surface direction can be formed at an arbitrary position of a test piece, as long as it is parallel to the tensile direction, and it is preferable that the cut sections are formed so that the fracture surfaces of the cut sections is large as possible, for convenience. The observation is performed with arbitrary 5 or more fields of view of the cut sections. The number density of differences in level in the tensile direction and cracks in the fracture direction per 10 mm, at each field of view, is respectively measured and average values thereof are acquired at the time of observation. Accordingly, each number density of differences in level in the fracture direction and cracks in the tensile direction is acquired.

A method of the fracture of the hot rolled steel and the steel component according to the embodiment is not particularly limited, and the fracture is preferably performed by using tensile stress parallel to the rolling direction. Since the Mn sulfides of the hot rolled steel and the steel component according to the embodiment are extended in a direction parallel to the rolling direction, the tensile stress parallel to the rolling direction is applied to form fracture surfaces substantially perpendicular to the rolling direction. Accordingly, an effect of formation of recesses and protrusions due to the Mn sulfides is maximized. In addition, in order to improve the fracture-split properties, it is preferable that notch machining is performed with respect to a portion where the fracture surface is to be formed, before applying tensile stress. A method of the notch machining is not particularly limited, and the notching machining may be performed by, for example, broaching or laser machining.

In the hot rolled steel and the steel component according to the embodiment, the amount of plastic deformation in the vicinity of the fracture surface is small and the amount of chips generated on the fracture surface is decreased, when the fracture and the split are performed. Accordingly, in a case where the fracture surfaces are fit to each other, the fracture surfaces can be fit to each other with excellent accuracy without occurrence of a position displacement, and it is possible to realize improvement of accuracy of the steel component and improvement of yield at the same time. In addition, by including the extremely small amount of Bi is included in the steel, the machinability can be improved. In addition, by using the hot rolled steel and the steel component according to the embodiment, a process of shaking chips off can be omitted, and a manufacturing cost can be reduced. Thus, it is greatly effective in improving economic efficiency in industry.

### [Examples]

The invention will be described in detail with reference to Examples. Examples are for describing technical significance and effects of the invention, and the scope of the invention is not limited.

### [Example 1]

Steel having chemical compositions shown in Table 1 and Table 2 and melted in a converter furnace was subjected to casting by an ingot process, set as a billet having a size of 162 mm × 162 mm through the blooming rolling process, and set to have a steel bar shape having a diameter of 56 mm through hot rolling. In a case of obtaining a round bar shape by performing the hot rolling with respect to the billet, the total reduction of area was set to 90%, and the reduction of area in a temperature range of 1,000°C or less was set to 80%. A symbol "-" shown in the tables indicates that an amount of an element relating to a part where the symbol is shown, is a detection limit value (on the same level as an amount of impurities) or less. A heating temperature and a heating time of the bloom before the blooming rolling were respectively 1,270°C and 140 min, and a heating temperature and a heating time of the billet before the hot rolling were respectively 1,240°C and 90 min. Values shown with underlines in Table 2 are numerical values in the ranges of the invention.

The average number density (Mn sulfide number density) of the Mn sulfides extended along the rolling direction and having an equivalent circle diameter of 1 µm to 5 µm and an aspect ratio of more than 10 and 30 or less, which is included in steels obtained by the method described above, and measured by using cross sections parallel to the rolling direction, is calculated by the following method. First, the steels were cut in a direction parallel to the rolling direction and the cut sections were polished. Then, enlarged images of the cut sections of the steels were captured with an optical microscope or an electron microscope. A magnification at this time was 100 times. By performing image analysis of the images, the number density of the Mn sulfides in the area, where the images are captured, was acquired. In addition, two Mn sulfides which are arranged in the rolling direction and has a gap between end portions of 10 µm or less were considered as one extended Mn sulfide. Further, the capturing images and the analysis were repeated at least 10 times and the number density obtained by these operation was averaged. Accordingly, the number density of the Mn sulfides of the steel was obtained.

The total amount of the ferrite and the pearlite included in the structure of the steel obtained by the method described above was obtained by cutting the steel, polishing and etching the cut surface, capturing a photomicrograph of the cut surface, and performing image analysis of this photomicrograph. The process described above was repeated four times, and an average value of the total amount of the ferrite and pearlite obtained was considered as the total amount of the ferrite and pearlite of steel. As a result of the measurement, it was confirmed that 90 area% or more of the metallographic structure of the entire steel was configured with ferrite and pearlite.

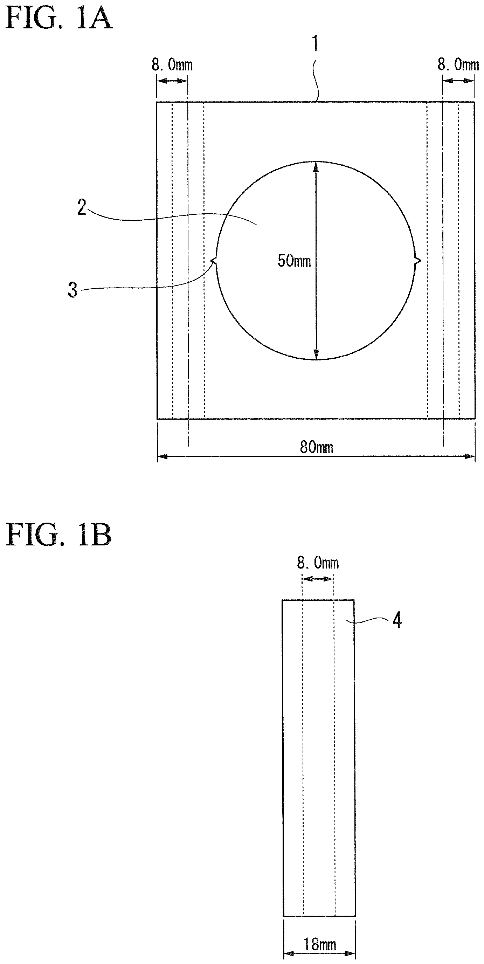

Next, in order to check the fracture-split properties, test pieces corresponding to forged conrods were manufactured by hot forging. Specifically, the steels set as a material steel bar having a diameter of 56 mm and a length of 100 mm by the process described above was heated to 1,150°C to 1,280°C, and the forging was performed in a direction perpendicular to a length direction of the steel bar to have a thickness of 20 mm. The forged steels were cooled to room temperature by any of oil quenching, blast cooling (cooling by sending wind to the test piece), or air cooling (radiational cooling in the atmosphere). The forged steel after the cooling was cut into a JIS No. 4 tensile test piece and a test piece for evaluation of fracture-split properties of a shape corresponding to a large end of a conrod. The JIS No. 4 tensile test piece was collected along a longitudinal direction at a position of 30 mm from a side surface of the forged steel. The test piece for evaluation of fracture-split properties is a test piece obtained by making a hole having a diameter of 50 mm in a center part of a plate shape having a size of 80 mm × 80 mm and a thickness of 18 mm, as shown in FIG. 1, and V-notch machining was performed with a depth of 1 mm, a front end curvature of 0.5 mm at 45 degrees, at two portions positioned at ± 90 degrees with respect to the length direction of the steel bar which is a material before the forging, on the inner surface of the hole having a diameter of 50 mm. In addition, a penetration hole having a diameter of 8 mm was made so that the center line thereof is positioned at a part of 8 mm from the side surface on the notch machining side, as a bolt hole.

A test apparatus for the evaluation of the fracture-split properties is configured with split mold and falling weight test devices. The split mold has a shape obtained by splitting a cylinder having a diameter of 46.5 mm formed on a rectangular steel into two along a center line. One side is fixed and the other side moves on a rail. A wedge hole was made on mating surfaces of two semicylinders. At the time of a fracture test, a hole having a diameter of 50 mm of a test piece is inserted into a cylinder having a diameter of 46.5 mm of this split mold to apply a wedge, and installed on the falling weight. The mass of the falling weight is 200 kg and has a system of falling along a guide. When the falling weight falls, the wedge is hit, and the test piece is subjected to tensile fracture into two. In addition, the surrounding of the test piece is fixed by pressing the split mold, so that the test piece is not isolated from the split mold at the time of the fracture.

A measurement method of the area ratio (brittle fracture area ratio) of the brittle fracture surface occupying the fracture section was as follows. First, steel was fractured at a falling weight height of 100 mm and a photomicrograph of the fracture surface was captured. By analyzing the photomicrograph according to a method of a typical fracture surface analysis, a region where a brittle fracture surface configured with a cleavage crack, a pseudo cleavage crack, or an intergranular crack was generated, was demarcated, and a percentage of the area of the region of the brittle fracture surface occupying the area of the entire fracture surface was calculated.

A measurement method of the deformation amount generated due to the fracture (deformation amount) and split was as follows. Bolting was performed by facing the test pieces after the fracture, and a difference between an inner diameter in the fracture direction and an inner diameter in a direction perpendicular to the fracture direction was measured. This difference was considered as the deformation amount generated due to the fracture and split.

A measurement method of the amount of chips generated on the fracture surfaces (amount of chips generated) was as follows. After performing the measurement of the deformation amount described above, an operation of facing and bolting the fracture surfaces at a torque of 20 N·m to assemble the fracture surfaces and then, loosening the bolt to release the fracture surfaces, was repeated 10 times. The total weight of fragments dropped due to the operations was defined as the amount of chips generated.

A steel having excellent fracture-split properties is a steel in which a fracture shape of the fracture surface is brittle, the deformation amount in the vicinity of the fracture surface due to the fracture and split is small, and the amount of chips generated is small. The inventors have determined that a steel in which the area ratio of the brittle fracture surface configured with a cleavage crack, a pseudo cleavage crack, or an intergranular crack is 98% or more, the deformation amount in the vicinity of the fracture surface is 100 µm or less, and the amount of chips generated is 1.0 mg, was a steel having excellent fracture-split properties.

The evaluation of the hot forgeability was performed by the following method. A round bar test piece having a diameter of 10 mm and a length of 100 mm was cut from a steel, this round bar test piece was heated under the conditions in which a temperature rising time was 60 seconds, a rate of temperature rise in a temperature range of 900°C or more was 1°C/sec, and the highest heating temperature was 1,100°C, the temperature of the round bar test piece was maintained at the highest heating temperature for 300 seconds, the round bar test piece was cooled to 900°C at a rate of temperature decrease of 5 °C/sec, the temperature of the round bar test piece was maintained at 900°C for 60 seconds, tensile deformation was added at strain rate of 5 /sec, and accordingly the round bar test piece was fractured. The sample having 50% or less of fracture reduction in area was determined as "BAD" regarding the hot forgeability, and the sample having more than 50% of fracture reduction in area was determined as "GOOD" regarding the hot forgeability.

A steel in which a fracture surface is formed, in which an average number density (number of cracks in the fracture surface direction) of cracks or recessed parts observed on the cross section parallel to the rolling direction, in which an angle with respect to the direction parallel to the tensile stress exceeds 45 degrees, which are formed over a length of 80 µm or more and some of which are propagated to an inner portion of the steel component, is limited to be less than 3.0 per 10 mm, was considered as a steel having excellent fracture-split properties. In order to increase fitting properties between the fracture surfaces, it is necessary that the sizes of the recesses and the protrusions of the fracture surfaces in the tensile direction (that is, the sizes of differences in level formed by the recesses and the protrusions) are great and the recesses and the protrusions are present at a high frequency. The inventors considered a sample in which a fracture surface is formed, in which an average number density (number of differences in level in the tensile direction) of differences in level (differences in level in the tensile direction) observed on the cross section parallel to the rolling direction, in which a difference in height towards a direction parallel to the tensile stress is 80 µm or more and an angle with respect to the direction parallel to the tensile stress is 45 degrees or less, is 2.0 or more per 10 mm, as a sample having high fitting properties.

The number density of each of the differences in level in the tensile direction and the cracks in the fracture surface direction of the fracture surface was measured by the following method. First, a test piece was cut in the tensile direction to allow the observation of the shapes of the fracture surfaces in a direction perpendicular to the tensile direction. By observing the shapes of the fracture surfaces on the cut sections described above, recesses and protrusions in the tensile direction and recesses and protrusions in the fracture surface direction were observed. The cut sections were formed so as to include the center of the fracture surface. The observation was performed with arbitrary 5 or more fields of view of the cut sections. At the time of the observation, the number density of differences in level in the tensile direction and cracks in the fracture direction per 10 mm, at each field of view, was respectively measured and an average values thereof were acquired.

As shown in Table 3, it was found that all of the present invention examples of manufacturing Nos. 1 to 17 satisfy the acceptance criteria, the hot forgeability is high, the fracture-split properties are excellent, and the fitting properties are excellent at the same time. In addition, in manufacturing Nos. 1 to 17, among the Mn sulfides in the steel, 50 pieces or more of the Mn sulfides satisfying the equivalent circle diameter regulation and the aspect ratio regulation described above were dispersed per 1 mm².

Meanwhile, as shown in Table 2, in the manufacturing Nos. 18 to 33, the amounts of C, Si, Mn, P, S, Cr, V, N, and Bi are beyond the range of the invention. These do not satisfy the requirements of the invention due to the following reasons, as shown in Table 4.

In the manufacturing Nos. 18, 20, 22, 24, 27, and 33, it was determined that the respective amounts of C, Si, Mn, P, S, and Bi were less than the lower limit of the range of the invention, and the amount of plastic deformation at the time of the fracture split was more than 100 µm, and accordingly, excellent fracture-split properties are not obtained.

In the manufacturing Nos. 19, 21, 23, 25, 26, and 31, the respective amounts of C, Si, Mn, P, S, and N were more than the upper limit of the range of the invention, or the Bi content is less than the lower limit of the range of the invention, and the amount of chips generated at the time of fracture was more than 1.0 mg.

In the manufacturing No. 28, the Cr content was more than the upper limit of the range of the invention, and the brittle fracture area ratio was less than 98%.

In the manufacturing No. 29, the V content was less than the lower limit of the range of the invention, and the brittle fracture area ratio was less than 98%.

In the manufacturing No. 30, the N content was more than the upper limit of the range of the invention, and a large number of steel scratches was generated during the manufacturing, and the evaluation of physical properties was not performed.

In the manufacturing No. 32, the Bi content was more than the upper limit of the range of the invention, and the hot forgeability was deteriorated. In addition, although not shown in the table, in the manufacturing No. 32, a significant number of scratches was generated during the manufacturing.

In the manufacturing No. 33, the Bi content was less than the range of the invention and the machinability was deteriorated.

Regarding the machinability, the hot rolled steel having a diameter of 56 mm described above was subjected to hot forging to have a diameter of 25 mm and cut to have a length of 500 mm, and subjected to machining under the following conditions using an NC lathe, and the evaluation was performed based on the inspected chips processing properties.

The chips processing properties were evaluated by the following method. The chips discharged for 10 seconds during the machinability test were collected. The length of the collected chips was measured, and 10 chips were selected from the longest chip. A total weight of the 10 selected chips was defined as a "chips weight". In a case where a total number of chips is less than 10 due to the connected long chips, a value which is 10 times the average weight per one collected chip was defined as the "chips weight". For example, in a case where a total number of chips was 7 and the total weight thereof was 12.0 g, the chips weight was calculated as 12.0 g x 10 pieces / 7 pieces = 17.1 g.

The chips used in the machinability evaluation were as follows.
Base metal: carbide P20 type grade
Coating: none

In addition, the machining conditions were as follows.
Circumferential speed: 150 m/min
Sending: 0.2 mm/rev
Cutting: 0.4 mm
Lubrication: water-soluble cutting oil used

A sample having the chips weight of each mark of 15 g or less was determined to have high cutting processing properties, and "GOOD" was shown in Table 3 and Table 4. In a case where the chips weight was more than 15 g, it was evaluated that the chips processing properties were low, and "BAD" was shown in Table 3 and Table 4. Regarding all of the steel including Bi, the chips weight was 15 g or less, whereas, in the manufacturing Nos. 18 to 21 and 33 not including Bi, the chips weight was more than 15 g and the machinability was deteriorated.

**[Table 1]**

| Steel No. | Composition (mass%) (remainder: Fe and impurities) | | | | | | | | | | | | Mn sulfide number density (pieces/mm²) | Note |
|---|---|---|---|---|---|---|---|---|---|---|---|---|---|---|
| | C | Si | Mn | P | S | Cr | V | N | B | Bi | Ti | Nb | | |
| A | 0.38 | 1.1 | 0.15 | 0.012 | 0.08 | 0.11 | 0.25 | 0.0085 | 0.0015 | 0.0015 | - | - | 142 | Present invention steel |
| B | 0.35 | 1.2 | 0.20 | 0.014 | 0.08 | 0.10 | 0.31 | 0.0101 | 0.0020 | 0.0018 | - | - | 117 | |
| C | 0.36 | 1.4 | 0.20 | 0.013 | 0.09 | 0.11 | 0.28 | 0.0098 | 0.0018 | 0.0016 | - | - | 135 | |
| D | 0.35 | 1.5 | 0.10 | 0.025 | 0.07 | 0.12 | 0.23 | 0.0088 | 0.0025 | 0.0012 | - | - | 142 | |
| E | 0.40 | 1.9 | 0.17 | 0.021 | 0.09 | 0.10 | 0.35 | 0.0105 | 0.0023 | 0.0025 | - | - | 129 | |
| F | 0.38 | 1.1 | 0.13 | 0.021 | 0.10 | 0.13 | 0.36 | 0.0081 | 0.0018 | 0.0029 | - | - | 140 | |
| G | 0.40 | 1.4 | 0.19 | 0.015 | 0.07 | 0.12 | 0.28 | 0.0145 | 0.0014 | 0.0020 | - | - | 113 | |
| H | 0.36 | 1.3 | 0.20 | 0.016 | 0.06 | 0.12 | 0.24 | 0.0143 | 0.0023 | 0.0016 | - | - | 75 | |
| I | 0.35 | 1.5 | 0.18 | 0.034 | 0.10 | 0.25 | 0.26 | 0.0130 | 0.0019 | 0.0035 | - | - | 125 | |
| J | 0.38 | 1.4 | 0.19 | 0.011 | 0.09 | 0.11 | 0.40 | 0.0081 | 0.0016 | 0.0014 | - | - | 136 | |
| K | 0.39 | 1.1 | 0.16 | 0.016 | 0.08 | 0.11 | 0.29 | 0.0071 | 0.0014 | 0.0050 | - | - | 131 | |
| L | 0.35 | 1.3 | 0.19 | 0.030 | 0.07 | 0.13 | 0.24 | 0.0148 | 0.0016 | 0.0023 | 0.030 | - | 108 | |
| M | 0.42 | 1.4 | 0.18 | 0.021 | 0.09 | 0.15 | 0.25 | 0.0083 | 0.0030 | 0.0029 | - | 0.025 | 119 | |
| N | 0.38 | 1.3 | 0.17 | 0.018 | 0.08 | 0.10 | 0.35 | 0.0147 | 0.0029 | 0.0015 | 0.035 | - | 107 | |
| O | 0.36 | 1.5 | 0.15 | 0.020 | 0.08 | 0.11 | 0.34 | 0.0082 | 0.0033 | 0.0018 | 0.028 | 0.011 | 136 | |
| P | 0.37 | 1.1 | 0.13 | 0.017 | 0.09 | 0.13 | 0.35 | 0.0085 | 0.0035 | 0.0023 | 0.015 | 0.012 | 151 | |
| Q | 0.38 | 1.0 | 0.15 | 0.016 | 0.07 | 0.11 | 0.23 | 0.0140 | 0.0021 | 0.0028 | 0.019 | 0.006 | 115 | |

| | | | | | | | | | | | | | | |
|---|---|---|---|---|---|---|---|---|---|---|---|---|---|---|
| Symbol "-" indicates a value of impurities which is less than the standard. | | | | | | | | | | | | | | |

**[Table 2]**

| Steel No. | Composition (mass%) (remainder: Fe and impurities) | | | | | | | | | | | | Mn sulfide number density (pieces/mm²) | Note |
|---|---|---|---|---|---|---|---|---|---|---|---|---|---|---|
| | C | Si | Mn | P | S | Cr | V | N | B | Bi | Ti | Nb | | |
| R | 0.34 | 1.3 | 0.20 | 0.021 | 0.08 | 0.07 | 0.23 | 0.0120 | 0.0012 | - | - | - | 105 | Comparative Steel |
| S | 0.46 | 1.3 | 0.20 | 0.019 | 0.08 | 0.08 | 0.25 | 0.0119 | 0.0015 | - | 0.015 | 0.010 | 128 | |
| T | 0.42 | 0.9 | 0.15 | 0.022 | 0.07 | 0.05 | 0.30 | 0.0097 | 0.0020 | - | - | - | 109 | |
| U | 0.40 | 2.0 | 0.20 | 0.019 | 0.09 | 0.12 | 0.35 | 0.0095 | 0.0018 | - | - | - | 139 | |
| V | 0.38 | 1.1 | 0.09 | 0.020 | 0.08 | 0.12 | 0.25 | 0.0095 | 0.0015 | 0.0012 | 0.025 | 0.025 | 169 | |
| W | 0.37 | 1.3 | 0.21 | 0.025 | 0.07 | 0.11 | 0.34 | 0.0098 | 0.0016 | 0.0016 | 0.024 | 0.029 | 78 | |
| X | 0.38 | 1.2 | 0.18 | 0.009 | 0.09 | 0.14 | 0.29 | 0.0106 | 0.0021 | 0.0020 | - | - | 104 | |
| Y | 0.37 | 1.4 | 0.16 | 0.036 | 0.09 | 0.13 | 0.26 | 0.0130 | 0.0023 | 0.0019 | - | 0.015 | 115 | |
| Z | 0.38 | 1.0 | 0.18 | 0.019 | 0.11 | 0.11 | 0.30 | 0.0129 | 0.0031 | 0.0014 | - | 0.012 | 167 | |
| A1 | 0.37 | 1.3 | 0.18 | 0.028 | 0.04 | 0.13 | 0.33 | 0.0137 | 0.0026 | 0.0015 | 0.015 | - | 47 | |
| B1 | 0.38 | 1.5 | 0.15 | 0.015 | 0.08 | 0.26 | 0.23 | 0.0101 | 0.0021 | 0.0025 | 0.012 | 0.011 | 93 | |
| C1 | 0.39 | 1.4 | 0.16 | 0.018 | 0.08 | 0.15 | 0.18 | 0.0104 | 0.0033 | 0.0022 | - | - | 102 | |
| D1 | 0.37 | 1.3 | 0.18 | 0.013 | 0.08 | 0.13 | 0.22 | 0.0151 | 0.0024 | 0.0015 | 0.015 | 0.008 | 116 | |
| E1 | 0.35 | 1.0 | 0.20 | 0.020 | 0.06 | 0.11 | 0.35 | 0.0155 | 0.0019 | 0.0016 | 0.013 | - | 78 | |
| F1 | 0.36 | 1.3 | 0.15 | 0.025 | 0.09 | 0.14 | 0.25 | 0.0075 | 0.0021 | 0.0055 | 0.015 | - | 123 | |
| G1 | 0.36 | 1.5 | 0.18 | 0.013 | 0.09 | 0.15 | 0.23 | 0.0105 | 0.0018 | - | - | - | 95 | |

| | | | | | | | | | | | | | | |
|---|---|---|---|---|---|---|---|---|---|---|---|---|---|---|
| Symbol "-" indicates a value of impurities which is less than the standard. The underlined values are beyond the regulated range of the invention. | | | | | | | | | | | | | | |

**[Table 3]**

| Manufacturing No. | Steel No. | Processing and cooling method | Number of difference in level in tensile direction | Deformation amount (µm) | area ratio of brittle fracture surface (%) | amount of chips generated (mg) | number of cracks in fracture surface direction | Machinability | Hot forgeability | Note |
|---|---|---|---|---|---|---|---|---|---|---|
| 1 | A | Hot forging, oil quenching | 2.8 | 55 | 100 | 0.9 | 1.9 | GOOD | GOOD | Present invention example |
| 2 | B | Hot forging, oil quenching | 2.6 | 45 | 100 | 0.6 | 1.5 | GOOD | GOOD | |
| 3 | C | Hot forging, oil quenching | 3.0 | 65 | 99 | 0.7 | 2.0 | GOOD | GOOD | |
| 4 | D | Hot forging, oil quenching | 3.5 | 88 | 100 | 0.5 | 1.3 | GOOD | GOOD | |
| 5 | E | Hot forging, oil quenching | 3.4 | 97 | 100 | 1.0 | 2.1 | GOOD | GOOD | |
| 6 | F | Hot forging, oil quenching | 2.9 | 51 | 100 | 0.7 | 2.3 | GOOD | GOOD | |
| 7 | G | Hot forging, oil quenching | 2.6 | 80 | 100 | 0.6 | 1.5 | GOOD | GOOD | |
| 8 | H | Hot forging, oil quenching | 2.3 | 78 | 99 | 0.7 | 1.9 | GOOD | GOOD | |
| 9 | I | Hot forging, oil quenching | 3.1 | 71 | 100 | 0.7 | 1.7 | GOOD | GOOD | |
| 10 | J | Hot forging, oil quenching | 2.9 | 81 | 99 | 0.6 | 1.3 | GOOD | GOOD | |
| 11 | K | Hot forging, air cooling | 2.7 | 93 | 99 | 0.6 | 1.5 | GOOD | GOOD | |
| 12 | L | Hot forging, blast cooling | 2.1 | 88 | 100 | 0.7 | 2.7 | GOOD | GOOD | |
| 13 | M | Hot forging, blast cooling | 2.3 | 93 | 100 | 0.6 | 1.6 | GOOD | GOOD | |
| 14 | N | Hot forging, oil quenching | 3.1 | 84 | 100 | 0.5 | 2.1 | GOOD | GOOD | |
| 15 | O | Hot forging, oil quenching | 2.1 | 77 | 99 | 0.4 | 1.3 | GOOD | GOOD | |
| 16 | P | Hot forging, oil quenching | 2.2 | 91 | 100 | 0.3 | 1.5 | GOOD | GOOD | |
| 17 | Q | Hot forging, oil quenching | 2.5 | 78 | 100 | 0.6 | 1.4 | GOOD | GOOD | |

**[Table 4]**

| Manufacturing No. | Steel No. | Processing and cooling meth od | Number of difference in level in tensile direction | Deformation amount (µm) | area ratio of brittle fracture surface (%) | amount of chips generated (mg) | number of cracks in fracture surface direction | Machinability | Hot forgeability | Note |
|---|---|---|---|---|---|---|---|---|---|---|
| 18 | R | Hot forging, oil quenching | 1.8 | 120 | 95 | 0.4 | 1.2 | BAD | GOOD | |
| 19 | S | Hot forging, oil quenching | 2.8 | 75 | 100 | 1.3 | 3.2 | BAD | GOOD | |
| 20 | T | Hot forging, oil quenching | 1.8 | 113 | 96 | 0.6 | 1.8 | BAD | GOOD | |
| 21 | U | Hot forging, oil quenching | 3.8 | 45 | 99 | 1.2 | 3.2 | BAD | GOOD | |
| 22 | V | Hot forcing, air cooling | 1.6 | 115 | 97 | 0.6 | 1.6 | GOOD | GOOD | |
| 23 | W | Hot forging, oil quenching | 2.5 | 68 | 100 | 1.2 | 3.1 | GOOD | GOOD | |
| 24 | X | Hot forging, oil quenching | 1.8 | 125 | 97 | 0.7 | 1.4 | GOOD | GOOD | Comparative Example |
| 25 | Y | Hot forging, oil quenching | 2.1 | 92 | 100 | 1.3 | 3.1 | GOOD | GOOD | |
| 26 | Z | Hot forging, oil quenching | 2.4 | 85 | 100 | 1.1 | 3.3 | GOOD | GOOD | |
| 27 | A1 | Hot forging, oil quenching | 1.9 | 109 | 100 | 0.5 | 1.5 | GOOD | GOOD | |
| 28 | B1 | Hot forging, blast cooling | 2.1 | 112 | 96 | 0.8 | 3.1 | GOOD | GOOD | |
| 29 | C1 | Hot forging, oil quenching | 2.2 | 105 | 97 | 0.7 | 3.1 | GOOD | GOOD | |
| 30 | D1 | Hot forging, oil quenching | Could not be evaluated due to a large number of scratches and determined as unsuitable material. | | | | | | | |
| 31 | E1 | Hot forging, oil quenching | 1.9 | 106 | 98 | 0.5 | 1.2 | GOOD | GOOD | |
| 32 | F1 | Hot forging, oil quenching | 2.7 | 92 | 100 | 0.6 | 1.3 | GOOD | BAD | |
| 33 | G1 | Hot forging, oil quenching | 2.3 | 87 | 100 | 0.8 | 1.8 | BAD | GOOD | |

### [Example 2]

The steel No. H-2 and the steel No. H-3 including the same chemical compositions as the steel No. H shown in Table 1 were manufactured under the conditions shown in Table 5, and the average number density (Mn sulfides number density) of the Mn sulfides including these steels and satisfying the equivalent circle diameter regulation and the aspect ratio regulation of the invention was measured. The "total reduction of area" of Table 5 is a total reduction of area (%) of the hot rolling, the "reduction of area at 1 ,000°C or less" is a total reduction of area (%) during a period of time of hot rolling in which the temperature of steel is 1,000°C or less, the "Mn sulfides number density" is a number density (pieces/mm²) of Mn sulfides satisfying the equivalent circle diameter regulation and the aspect ratio regulation of the invention. The manufacturing conditions not shown in Table 5 were the same as those used for the manufacturing Nos. 1 to 33.

**[Table 5]**

| Steel No. | Rolling | | Mn sulfide number density (pieces/mm²) |
|---|---|---|---|
| | Total reduction of area (%) | Total reduction of area at 1,000°C or less (%) | |
| H-2 | 75 | 55 | 47 |
| H-3 | 90 | 45 | 45 |

As shown in Table 1, in the steel No. H, the Mn sulfide number density was in the range of the invention. On the other hand, as shown in Table 5, in the steel No. H-2 and the steel No. H-3, the manufacturing conditions were beyond the range of the invention, and thus, the Mn sulfide number density was beyond the range of the invention.

The steel No. H-2 is an example in which the total reduction of area at the time of hot rolling is less than 80%, and the steel No. H-3 is an example in which the reduction of area in a temperature range of 1,000°C or less which is a temperature range in which the Mn sulfides are easily extended, is less than 50%. The Mn sulfides were not sufficiently extended at the time of the hot rolling. Accordingly, it is assumed that the Mn sulfide number density was not sufficient, in the steel No. H-2 and the steel No. H-3.

### [Industrial Applicability]

In a case where the hot rolled steel according to the embodiment is cooled by air cooling or blast cooling after hot forging, and fracture-split, the amount of plastic deformation in the vicinity of a fracture surface is small, the amount of chips of the fracture surface generated is small, and excellent fracture-split properties are obtained. Regarding the hot rolled steel and the steel component according to the embodiment, the amount of plastic deformation in the vicinity of a fracture surface is small, and the amount of chips of the fracture surface generated is small. Therefore, the fracture surfaces can be fit to each other with excellent accuracy without occurrence of a position displacement at the time of the fitting of the fracture surfaces, and it is possible to improve yield of product manufacturing. In addition, by realizing these properties, regarding the hot rolled steel and the steel component according to the embodiment, a process of shaking the chips off can be omitted, the manufacturing cost can be reduced, and it is greatly effective in industry. Further, hot rolled steel and the steel component according to the embodiment have excellent machinability, and therefore, the operation during the component manufacturing is effective and the productivity can be improved.

### [Brief Description of the Reference Symbols]

- 1:: test piece
- 2:: hole
- 3:: V notch
- 4:: penetration hole
- 10:: steel component
- 11:: Mn sulfide
- 12:: crack
- 21:: crack in fracture surface direction
- 22:: difference in level in tensile direction

## Claims

1. A hot rolled steel comprising, as a chemical composition:
C: 0.35 mass% to 0.45 mass%;
Si: 1.0 mass% to 1.9 mass%;
Mn: 0.10 mass% to 0.20 mass%;
P: 0.010 mass% to 0.035 mass%;
S: 0.06 mass% to 0.10 mass%;
Cr: 0.25 mass% or less;
V: 0.20 mass% to 0.40 mass%;
N: 0.0060 mass% to 0.0150 mass%;
B: 0.0050 mass% or less;
Bi: 0.0001 mass% to 0.0050 mass%;
Ti: 0 mass% to 0.050 mass%;
Nb: 0 mass% to 0.030 mass%; and
a remainder including Fe and impurities,
wherein 90 area% or more of a metallographic structure is configured with a ferrite and a pearlite, and
an average number density of Mn sulfides measured on a cross section parallel to a rolling direction having an equivalent circle diameter of 1 µm to 5 µm and an aspect ratio of more than 10 and 30 or less which is extended along the rolling direction, is 50 pieces/mm² to 200 pieces/mm².

2. The hot rolled steel according to claim 1, comprising, as the chemical composition:
one or two elements of Ti: 0.005 mass% to 0.050 mass% and Nb: 0.005 mass% to 0.030 mass%.

3. A steel component comprising, as a chemical composition:
C: 0.35 mass% to 0.45 mass%;
Si: 1.0 mass% to 1.9 mass%;
Mn: 0.10 mass% to 0.20 mass%;
P: 0.010 mass% to 0.035 mass%;
S: 0.06 mass% to 0.10 mass%;
Cr: 0.25 mass% or less;
V: 0.20 mass% to 0.40 mass%;
N: 0.0060 mass% to 0.0150 mass%;
B: 0.0050 mass% or less;
Bi: 0.0001 mass% to 0.0050 mass%;
Ti: 0 mass% to 0.050 mass%;
Nb: 0 mass% to 0.030 mass%; and
a remainder including Fe and impurities,
wherein 90 area% or more of a metallographic structure is configured with a ferrite and a pearlite, and
an average number density of Mn sulfides measured on a cross section parallel to a rolling direction having an equivalent circle diameter of 1 µm to 5 µm and an aspect ratio of more than 10 and 30 or less which is extended along the rolling direction, is 50 pieces/mm² to 200 pieces/mm².

4. The steel component according to claim 3,
wherein, in a case where tensile fracture of the steel component is caused by tensile stress parallel to the rolling direction to form a fracture surface,
differences in level observed on the cross section parallel to the rolling direction, in which a difference in height towards a direction parallel to the tensile stress is 80 µm or more and an angle with respect to the direction parallel to the tensile stress is 45 degrees or less, are formed on the fracture surface at an average number density of 2.0 or more per 10 mm,
a brittle fracture surface is 98% or more of the fracture surface as an area ratio, and
an average number density of cracks or recessed parts observed on the cross section parallel to the rolling direction, in which an angle with respect to the direction parallel to the tensile stress exceeds 45 degrees, which are formed over a length of 80 µm or more and some of which are propagated to an inner portion of the steel component, is less than 3.0 per 10 mm on the fracture surface.

5. The steel component according to claim 3 or 4, comprising, as the chemical composition:
one or two elements of Ti: 0.005 mass% to 0.050 mass% and Nb: 0.005 mass% to 0.030 mass%.
